# EUROPEAN PATENT SPECIFICATION

(11) **EP 3 271 858 B1**
(45) Date of publication and mention of the grant of the patent: **19.08.2020**
(21) Application number: 16768005.7
(22) Date of filing: 15.03.2016
(51) Int. Cl.: G06F 21/60, G06F 3/12, G06F 21/31, H04N 1/32, H04N 1/44

(54) **OUTPUT APPARATUS, PROGRAM, OUTPUT SYSTEM, AND OUTPUT METHOD**
AUSGABEVORRICHTUNG, PROGRAMM, AUSGABESYSTEM UND AUSGABEVERFAHREN
APPAREIL DE SORTIE, PROGRAMME, SYSTÈME DE SORTIE, ET PROCÉDÉ DE SORTIE

(30) Priority: 20.03.2015 JP 2015057336
(43) Date of publication of application: 24.01.2018
(73) Proprietor: Ricoh Company, Ltd., Tokyo 143-8555 (JP)
(72) Inventor: MORI, Keisuke, Tokyo 143-8555 (JP); YAMASHITA, Akihiro, Tokyo 143-8555 (JP)
(74) Representative: SSM Sandmair
(86) International application number: PCT/JP2016/001490
(87) International publication number: WO 2016/152098

(56) References cited:
- EP-A2- 2 725 480
- WO-A1-2011/016338
- JP-A- 2012 039 527
- US-A1- 2006 232 795
- US-A1- 2006 232 795
- US-A1- 2009 201 526
- US-A1- 2011 179 466
- US-A1- 2011 264 865
- US-A1- 2011 264 865
- US-A1- 2012 127 519
- US-A1- 2013 088 738
- US-A1- 2014 071 484

## Description

### Technical Field

The disclosures discussed herein generally relate to an output apparatus, an output system, an output method, and a program.

### Background Art

Related art technologies propose printing systems that employ so-called pull printing (accumulation printing). The pull printing systems enable users to temporarily accumulate print data into a server and request the server to output the accumulated print data from desired printers. Such related art printing systems, for example, allow only users who have logged into a printer to output the print data that the users themselves have accumulated for securing confidentiality.

For example, a related art technology has proposed a printing system capable of preventing highly confidential print data from being disclosed to other users to reduce leakage of confidential information. This technology is achieved by controlling display of document names, etc. associated with print data displayed on a printer after the users have logged into the printer (e.g., Patent Document 1).

EP2725480 A2 discloses an image forming apparatus comprising a communication interface unit to communicate with a server and a print controlling apparatus. The image forming apparatus receives a user job command and print data from the print controlling apparatus. The image forming apparatus comprises a controller and an image forming unit. The controller determines forming an image in the image forming unit in accordance with the job command. In an on-line state the server is in communication with the image forming apparatus, in an off-line state such connection is cut off. When the image forming apparatus receives a job command from the print controlling apparatus, the server provides user authentication. In addition to that, the server also provides a quota information associated with the user. The image forming apparatus also comprises a storage unit that stores quota information whenever it is received from the server. When the server is off-line, the quota information stored in the storage unit is used instead of the quota information that cannot be received from the server.

### Citation List

### Patent Literature

[PTL 1] Japanese Unexamined Patent Application Publication No. 2012-141948

### Summary of Invention

The invention is set out in the appended set of claims. The dependent claims set out particular embodiments.

### Technical Problem

The related art printing systems may utilize an authentication server apparatus to authenticate users who operate a printer. However, the such related art printing systems may fail to output the print data when failing to receive authentication results of the users from the authentication server apparatus due to breakdown or communications malfunction. Such failure to output print data may be observed in not only the printing systems but may also be observed in output systems, which allow an output apparatus such as a projector or a monitor to output data that the users have accumulated by themselves in accumulation destinations.

### Solution to Problem

Accordingly, it is a general object in one embodiment of the present invention to provide an output apparatus capable of implementing redundancy of a user authentication process that substantially obviates one or more problems caused by the limitations and disadvantages of the related art.

In accordance with an aspect of embodiments there is provided an output apparatus configured to perform communications with a terminal apparatus and an authentication apparatus. The output apparatus includes an authentication request unit configured to transmit an authentication request of a user to the authentication apparatus to acquire, when authentication of the user has succeeded, terminal apparatus information in association with the user; a terminal apparatus information accumulation unit configured to accumulate the acquired terminal apparatus information in association with the user; an output data acquisition unit configured to acquire output data accumulated in the terminal apparatus from the terminal apparatus specified by the acquired terminal apparatus information in association with the user; and an output processor configured to perform an output process to output the output data. The output data acquisition unit acquires, upon failing to acquire a response to the authentication request of the user from the authentication apparatus, the output data accumulated in the terminal apparatus from the terminal apparatus specified by the terminal apparatus information in association with the user.

### Advantageous Effect of the Invention

An aspect of embodiments may achieve redundancy of a user authentication process.

### Brief Description of Drawings

[fig.1]FIG. 1 is a configuration diagram illustrating an example of a printing system according to a first embodiment;
[fig.2]FIG. 2 is a hardware configuration diagram illustrating an example of a computer according to the first embodiment;
[fig.3]FIG. 3 is a hardware configuration diagram illustrating an example of an image forming apparatus according to the first embodiment;
[fig.4]FIG. 4 is a process block diagram illustrating an example of an AD server apparatus according to the first embodiment;
[fig.5]FIG. 5 is a table illustrating an example of client terminal information held by a client terminal information holder;
[fig.6]FIG. 6 is a process block diagram illustrating an example of the image forming apparatus according to the first embodiment;
[fig.7]FIG. 7 is a process block diagram illustrating an example of a client terminal according to the first embodiment;
[fig.8]FIG. 8 is a process block diagram illustrating an example of a job accumulation plugin;
[fig.9]FIG. 9 is an explanatory diagram illustrating an example of a printing process performed in a printing system according to the first embodiment;
[fig.10]FIG. 10 is a configuration diagram illustrating an example of print job information;
[fig.11]FIG. 11 is an explanatory diagram illustrating an example of a printing process performed in a printing system according to the embodiment;
[fig.12]FIG. 12 is a sequence diagram illustrating an example of a setting process;
[fig.13]FIG. 13 is an image diagram illustrating an example of an encryption selection screen;
[fig.14]FIG. 14 is a flowchart illustrating an example of a printing process performed by a print processor;
[fig.15]FIG. 15 is a flowchart illustrating an example of a TGT acquisition process in the image forming apparatus;
[fig.16]FIG. 16 is a flowchart illustrating an example of a service ticket acquisition process in the image forming apparatus;
[fig.17]FIG. 17 is a flowchart illustrating an example of an authentication token matching process in a client apparatus;
[fig.18]FIG. 18 is a table illustrating another example of client terminal information held by the client terminal information holder;
[fig.19]FIG. 19 is a configuration diagram illustrating another example of a printing system according to a second embodiment; and
[fig.20]FIG. 20 is a flowchart illustrating an example of a job list display process.

### Description of Embodiments

The following illustrates details of embodiments. Note that the embodiments disclosed below illustrate a printing system as an example of an output system; however, the embodiments applied are not limited to the printing system. The output system may be any systems, in addition to a projection system and a display system, insofar as the systems are configured to output data accumulated in an accumulation destination.

### FIRST EMBODIMENT

### SYSTEM CONFIGURATION

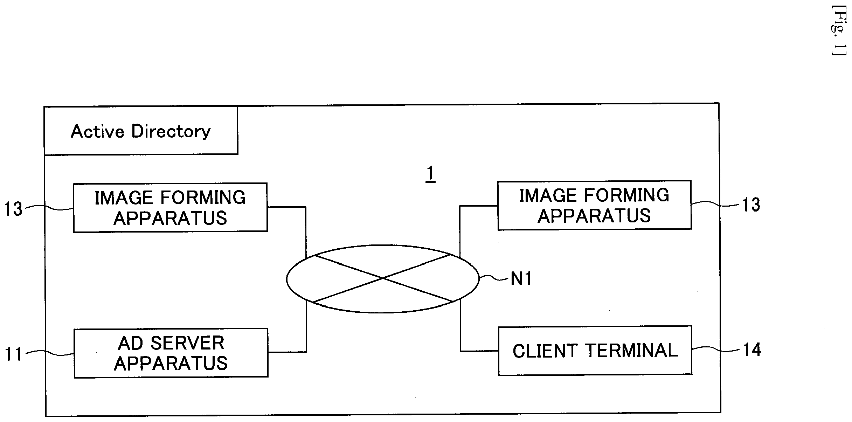

FIG. 1 is a configuration diagram illustrating an example of a printing system according to a first embodiment. A printing system 1 of FIG. 1 includes an active directory (AD) server apparatus 11, an image forming apparatus 13, and a client terminal 14 that are connected via a network N1 such as a local area network (LAN). The AD server apparatus 11, the image forming apparatus 13, and the client terminal 14 each have a wired or wireless communications unit. FIG. 1 depicts an example of the printing system 1 having a single AD server apparatus 11 and a single client terminal 14; however, the printing system 1 may include two or more AD server apparatuses 11 and two or more client terminals 14. In addition, the printing system 1 may include one or more image forming apparatuses 13, or three or more image forming apparatuses 13. Note that the AD server apparatus 11, the image forming apparatus 13, and the client terminal 14 of the printing system 1 according to the first embodiment operate under an active directory domain.

The AD server apparatus 11 may be implemented by one or more information processing apparatuses. The AD server apparatus 11 is configured to provide a directory service. In addition, the AD server apparatus 11 is configured to function as KDC (key distribution center) in Kerberos authentication. KDC may function as an authentication server, a ticket granting server, and a key database.

The authentication server of the AD server apparatus 11 is configured to hold user information, and perform authentication based on a request from a principal such as the image forming apparatus 13 or the like. The ticket granting server of the AD server apparatus 11 is configured to grant a ticket of data to identify a user for granting access authorization. The key database of the AD server apparatus 11 is configured to manage a common key of the principal such as the image forming apparatus 13.

The image forming apparatus 13 is an example of an output apparatus configured to perform printing based on received print data or print job information. Note that the image forming apparatus 13 may be a printing apparatus such as a printer, a copier, a multifunction peripheral, or a laser printer, a display apparatus configured to execute a display output such as a projector or a monitor, or an sound-voice output apparatus configured to output sound such as audio.

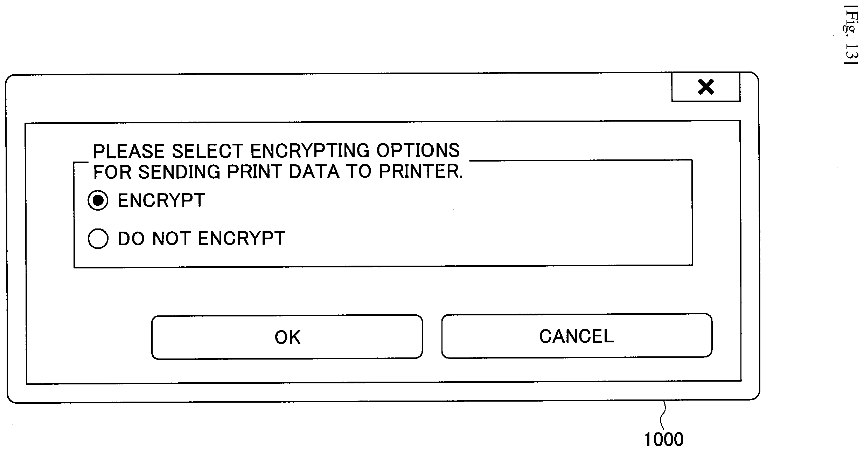

The client apparatus 14 is an information processing apparatus used by a user. The client terminal 14 may be a terminal apparatus such as a smartphone, a mobile phone, and a personal computer (PC). Note that a configuration of the printing system 1 illustrated in FIG. 13 is merely an example, and the printing system 1 may have other configurations.

### HARDWARE CONFIGURATION

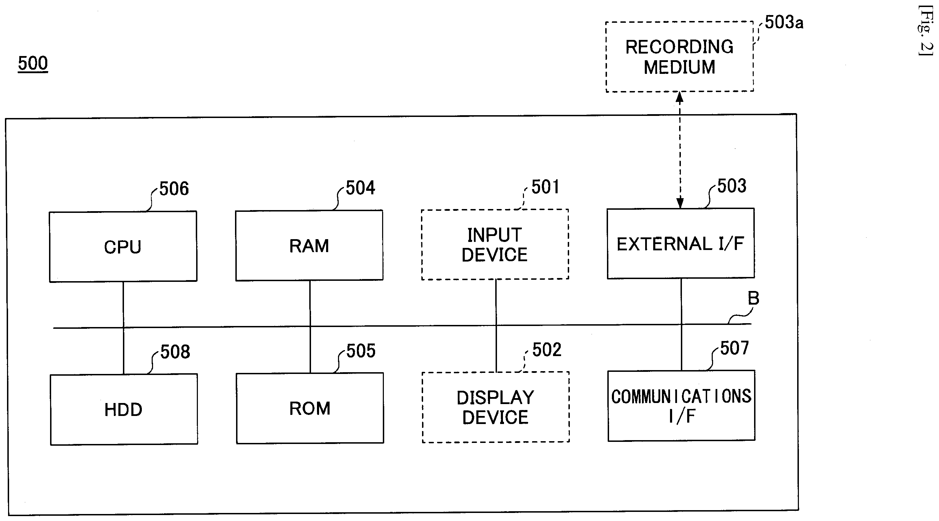

The AD server apparatus 11 and the client terminal 14 illustrated in FIG. 1 may be implemented by a computer having a hardware configuration illustrated in FIG. 2, for example. FIG. 2 is a hardware configuration diagram illustrating an example of the computer according to the first embodiment.

The computer 500 illustrated in FIG. 2 includes an input device 501, a display device 502, an external I/F 503, a RAM 504, a ROM 505, a CPU 506, a communications I/F 507, an HDD 508, and the like that are connected to one another via a bus B. Note that the input device 501 and the display device 502 may be connected to the computer 500 as required.

The input device 501 includes a keyboard, a mouse, a touch panel and the like, and is configured to allow a user to input various operation signals. The display device 502 includes a display and the like, and is configured to display process results obtained by the computer 500.

The communications I/F 507 serves as an interface configured to connect the computer 500 to the network N1. This configuration enables the computer 500 to perform data communications via the communications I/F 507.

The HDD 508 serves as a nonvolatile storage configured to store programs and data. Examples of the programs and data to be stored include an operating system (OS) serving as basic software that is configured to control the computer 500 as a whole, application software (hereinafter simply called "application(s)") that is configured to provide various functions on the OS, and the like. Note that the computer 500 may employ a drive device (e.g., a solid-state drive) utilizing a flash memory as a storage medium in place of the HDD 508.

The external I/F 503 serves as an interface with respect to external devices. Examples of the external devices include a recording medium 503a, and the like. The computer 500 may be able to read information from the recording medium 503a or write information on the recording medium 503a via the external I/F 503. Examples of the recording medium 503a include a flexible disk, a compact disk (CD), a digital versatile disk (DVD), a secure digital(SD) card, and a universal serial bus (USB) memory.

The ROM 505 is an example of a nonvolatile semiconductor memory (a storage device) configured to retain programs or data even when the power supply is turned off. The ROM 505 is configured to store programs and data such as BIOS, OS settings, network settings, and the like that are executed at startup of the computer 500. The RAM 504 is a volatile semiconductor memory (a storage device) configured to temporarily store programs and data.

The CPU 506 is a processor configured to implement overall control operations or functions of the computer 500 by loading programs and data in the RAM 504 from a storage device such as the ROM 505 or the HDD 508 to execute processes in accordance with the loaded programs and data. The AD server apparatus 11 and the client terminal 14 in the first embodiment may be able to implement later-described various types of processes based on the above-described hardware configuration of the computer 500.

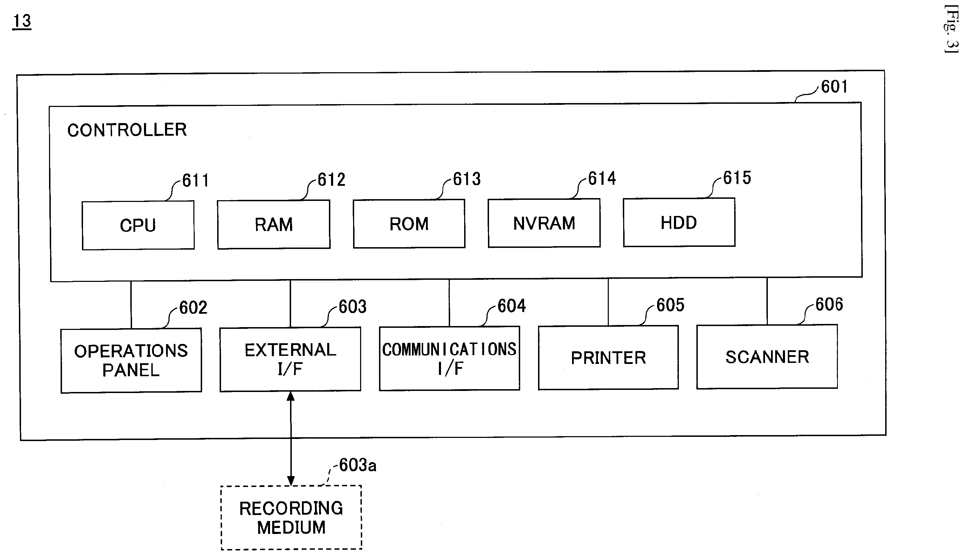

The image forming apparatus 13 of FIG. 1 may be implemented by a computer having a hardware configuration illustrated in FIG. 3, for example. FIG. 3 is a hardware configuration diagram illustrating an example of the image forming apparatus according to the first embodiment. The image forming apparatus 13 includes a controller 601, an operations panel 602, an external I/F 603, a communications I/F 604, a printer 605, and a scanner 606.

The controller 601 includes a CPU 611, a RAM 612, a ROM 613, a NVRAM 614, and an HDD 615. The ROM 613 is configured to store various types of programs and data. The RAM 612 is configured to temporarily hold programs and data. The NVRAM 614 may, for example, store setting information and the like. The HDD 615 is configured to store various types of programs and data.

The CPU 611 is configured to implement overall control of operations or functions of the image forming apparatus 13 by loading programs, data, and setting information in the RAM 612 from a storage device such as the ROM 613, the NVRAM 614, and the HDD 615 to execute processes in accordance with the loaded programs, data, and setting information.

The operations panel 602 includes an input part configured to receive input from the user, and a display part configured to perform display. The external I/F 603 servers as an interface with respect to external devices. Examples of the external devices include a recording medium 603a, and the like. The external I/F 603 enables the image forming apparatus 13 to read information from the recording medium 603a or write information on the recording medium 603a via the external I/F 603. Examples of the recording medium 603a include a flexible disk, a CD, a DVD, an SD card, and a USB memory.

The communications I/F 604 serves as an interface configured to connect the output apparatus 13 to the network N1. The communications I/F 604 enables the image forming apparatus 13 to perform data communications with the client terminal 14 and the like connected to the network N1 via the communications I/F 604.

The printer 605 is a printing apparatus configured to print the print data on sheets of paper. The scanner 606 is a reading apparatus configured to read image data (electronic data) from a document.

### SOFTWARE CONFIGURATION

### AD SERVER APPARATUS

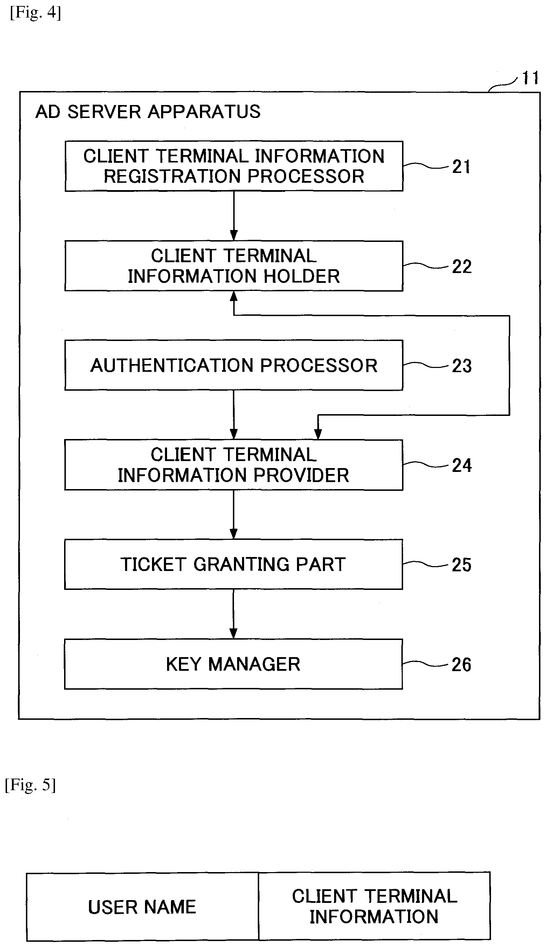

The AD server apparatus 11 according to the first embodiment may be implemented, for example, by process blocks illustrated in FIG. 4. FIG. 4 is a process block diagram illustrating an example of the AD server apparatus according to the first embodiment.

The AD server apparatus 11 is configured to execute programs to implement a client terminal information registration processor 21, a client terminal information holder 22, an authentication processor 23, a client terminal information provider 24, a ticket granting part 25, and a key manager 26.

The client terminal information registration processor 21 is configured to receive a registration request for later-described client terminal information from the client terminal 14 to perform a client terminal information registration process. The client terminal information holder 22 is configured to hold the client terminal information the registration request of which is received from the client terminal 14 as described later.

The authentication processor 23 is configured to receive an authentication request from the image forming apparatus 13 to perform an authentication process. The client terminal information provider 24 is configured to provide the image forming apparatus 13 with the client terminal information in association with a user operating the image forming apparatus 13. The ticket granting part 25 is configured to grant a ticket in Kerberos authentication. The key manager 26 is configured to manage keys for use in the Kerberos authentication.

FIG. 5 is a table illustrating an example of client terminal information held by the client terminal information holder 22. The client terminal information holder 22 is configured to hold a user name and client terminal information as illustrated in FIG. 5. The user name is an example of identification information that uniquely identifies a user. The client terminal information is an example of identification information that uniquely identifies the client terminal 14.

The client terminal information may be information such as an IP address or a MAC address necessary for performing data communications with the client terminal 14, or may be information specifying such as a host name or an apparatus ID necessary for performing data communications with the client terminal 14. The AD server apparatus 11 may be able to provide the image forming apparatus 13 with the client terminal information in association with the successfully authenticated user based on the client terminal information illustrated in FIG. 5.

### IMAGE FORMING APPARATUS

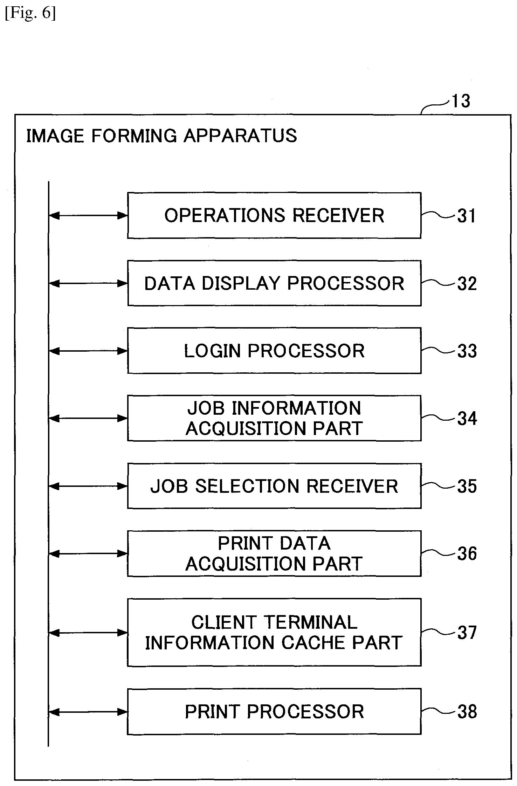

The image forming apparatus 13 according to the first embodiment may be implemented, for example, by process blocks illustrated in FIG. 6. FIG. 6 is a process block diagram illustrating an example of the image forming apparatus according to the first embodiment.

The image forming apparatus 13 is configured to execute programs to implement an operations receiver 31, a data display processor 32, a login processor 33, a job information acquisition part 34, a job selection receiver 35, a print data acquisition part 36, a client terminal information cache part 37, and a print processor 38.

The operations receiver 31 is configured to receive operations from a user. The data display processor 32 is configured to display information or the like to the user. The login processor 33 is configured to receive a login operation from the user to perform a later-described login process. The job information acquisition part 34 is configured to acquire print job information from the client terminal 14. The job selection receiver 35 is configured to receive a desired one of the print jobs selected from a later-described print job information list (job list) screen. The print data acquisition part 36 is configured to acquire print data of the print job selected by the user from the client terminal 14.

The client terminal information cache part 37 is configured to cache the client terminal information acquired from the AD server apparatus 11 in association with the user name, as illustrated in FIG. 5, for example. The print processor 38 is configured to cause the printer 605 to print the acquired print data in accordance with the print settings.

The image forming apparatus 13 may be able to acquire the client terminal information by caching the client terminal information in association with the user name in the client terminal information cache part 37 even when the image forming apparatus 13 is unable to receive an authentication result of the user due to failure of the AD server apparatus 11 or the like. The image forming apparatus 13 may be able to acquire print job information and print data from the client terminal 14 specified by the client terminal information in association with the user to perform a printing process.

### CLIENT TERMINAL

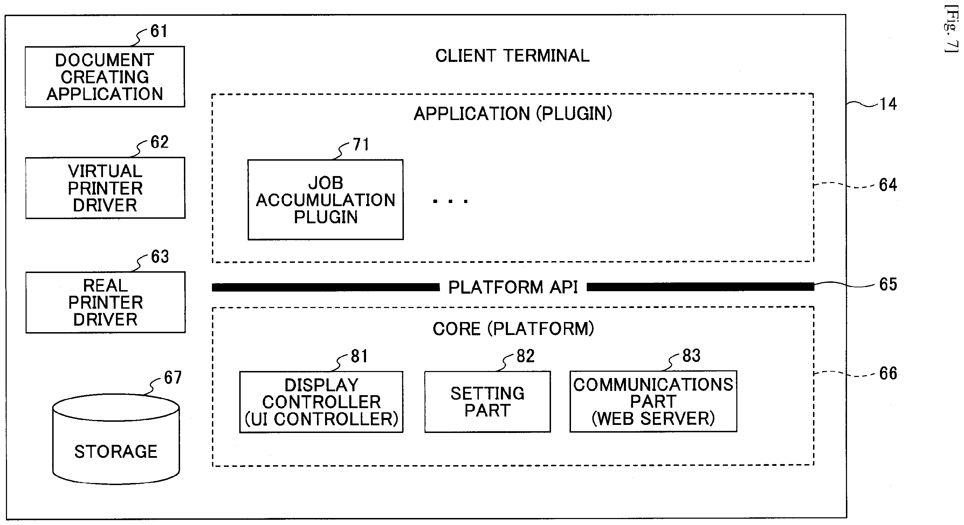

The client terminal 14 according to the first embodiment may be implemented, for example, by process blocks illustrated in FIG. 7. FIG. 7 is a process block diagram illustrating an example of the client terminal according to the first embodiment.

The client terminal 14 is configured to execute programs to implement a document creating application 61, a virtual printer driver 62, a real printer driver 63, a plugin 64, a platform API 65, a platform 66, and a storage 67. The plugin 64 includes a job accumulation plugin 71. The platform 66 includes a display controller (UI controller) 81, a setting part 82, and a communications part 83.

The document creating application 61 is an example of an application configured to receive a print request from the user. The document creating application 61 is only an example, and may be an application configured to receive an output request such as a print request from the user.

The virtual printer driver 62 is configured to convert application data into print data in a model-independent intermediate format to output the converted print data. The print data in the intermediate format are independent of models of the image forming apparatus 13. Data in XPS (XML Paper Specification) are an example of the intermediate format print data. Application data are an example of data subject to outputting.

The real printer driver 63 is a printer driver configured to convert the application data or the intermediate format print data into print data in a format compatible to the image forming apparatus 13 to allow the image forming apparatus 13 to print the converted print data. Data in a RAW format are an example of print data in a real format.

Note that data subject to outputting such as the application data or the print data in the intermediate format or in the real format may be considered as output data handled as an output target from the time at which the user transmits an output request to the time at which the output apparatus outputs the output target. The application data may, for example, be data in a data format in accordance with the application.

Hence, the application data, the print data in the intermediate format, the print data in the real format, and the like may be data subject to outputting regardless of data formats from the time at which the output request is transmitted to the time at which the output is executed.

Further, the output data are not limited to data for use in print output. The output data may be data for use in display output (projection) such as display data or image data, or may be data for use in sound output (sound-voice) data. The output data may be handled in accordance with corresponding output applications such as printing, displaying, replaying sound or voice, or may be handled in accordance with a combination of these output applications.

The plugin 64 is software operating on the platform 66. The plugin 64 may access a function of the platform 66 by utilizing the platform API 65. The job accumulation plugin 71 of the plugin 64 is configured to perform a process relating to print job accumulation and print job management.

The platform API 65 is an interface prepared for the plugin 64 to access a function of the platform 66. The platform API 65 is a predefined interface provided for allowing the platform 66 to receive a request from the plugin 64. The platform API 65 may, for example, be composed of functions or classes.

The display controller 81 of the platform 66 may be configured to control display of the display device 502 based, for example, on a request from the document creating application 61, or the plugin 64. The setting part 82 is configured to set the plugin 64. The communications part 83 is configured to perform communications with the AD server apparatus 11 or the image forming apparatus 13. The storage 67 is configured to store settings and the like.

The client terminal 14 is configured to integrate functions commonly used by the plugin 64 so as to integrate processes. Note that classification of components in the process block diagram in FIG. 7 is merely an example. It is not mandatory to hierarchically classify the components such as those illustrated in FIG. 7. The desired plugin 64 may be appropriately installed and used by the administrator or the user. The client terminal 14 may thus include a plugin other than the job accumulation plugin 71.

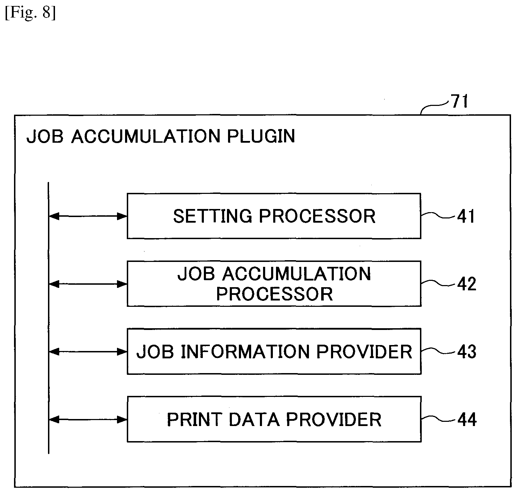

The job accumulation plugin 71 of the client terminal 14 may be implemented, for example, to include process blocks illustrated in FIG. 8. FIG. 8 is a process block diagram illustrating an example of a job accumulation plugin. The job accumulation plugin 71 illustrated in FIG. 8 includes a setting processor 41, a job accumulation processor, a job information provider 43, and a print data provider 44.

The setting processor 41 is configured to perform a process relating to settings necessary for performing accumulation printing in the printing system 1 of FIG. 1. The job accumulation processor is configured to perform a process relating to accumulating print jobs such as print job information and print data. The job information provider 43 is configured to provide print job information that is information relating to a print job based on a request from the image forming apparatus 13. The print data provider 44 is configured to provide print data indicating actual data of the print job based on a request from the image forming apparatus 13.

### DETAILS OF PROCESS

The following describes details of a process of the print system 1 according to the first embodiment. The accumulation printing in the printing system 1 according to the first embodiment assumes that the client terminal 14 is configured to accumulate the print job information and print data.

The accumulation printing in the printing system 1 according to the first embodiment also assumes that the image forming apparatus 13 is configured to acquire the client terminal information indicating an accumulation destination of the user's print job information and print data from the AD server apparatus 11 to acquire the print job information and the print data from the client terminal 14 serving as the accumulation destination to perform a printing process.

### PROCESS OF PRINTING SYSTEM ACCORDING TO FIRST EMBODIMENT

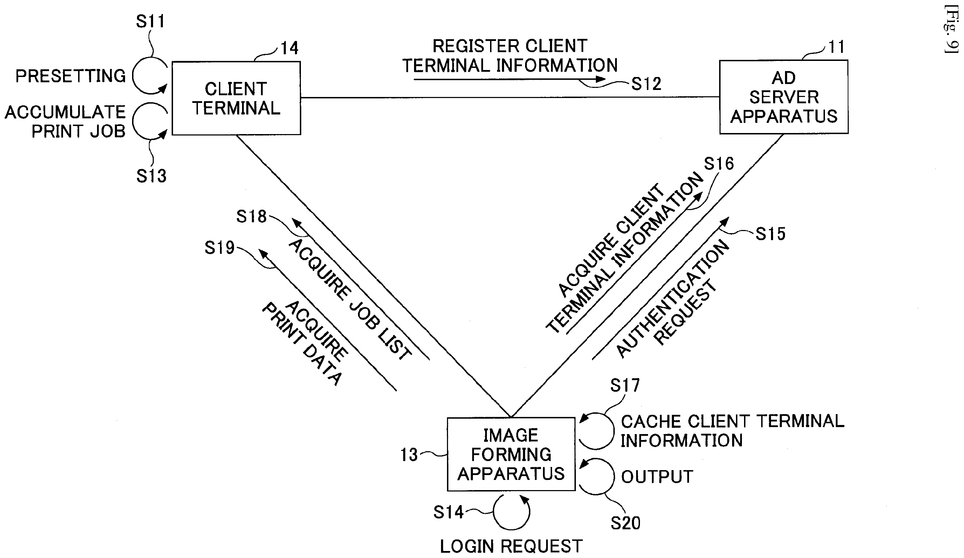

The printing system 1 according to the embodiment may perform accumulation printing by following, for example, a process illustrated in FIG. 9. FIG. 9 is an explanatory diagram illustrating an example of a printing process performed in a printing system according to the first embodiment.

In step S11, the setting processor 41 of the client terminal 14 receives pre-settings from a user. The pre-settings include various types of settings necessary for users to use the printing system 1 according to the first embodiment. The pre-settings include a communications setting, a user authentication setting, a Kerberos authentication setting, a print job storing setting, a print job encrypt setting, and the like.

In step S12, the setting processor 41 of the client terminal 14 receives a registration instruction for the client terminal information from the user. The setting processor 41 transmits a registration request for the client terminal information to the AD server apparatus 11. The client terminal information registration processor 21 of the AD server apparatus 11 causes the client terminal information holder 22 to hold the client terminal information in association with user name. Note that steps S1 and S12 may be performed by an administrator or the like other than the user who performs accumulation printing.

In step S13, the job accumulation processor of the client terminal 14 receives an accumulation request for the print job (printing instruction by selecting a virtual printer driver 62) from the user and stores the print job information and the print data in the storage 67.

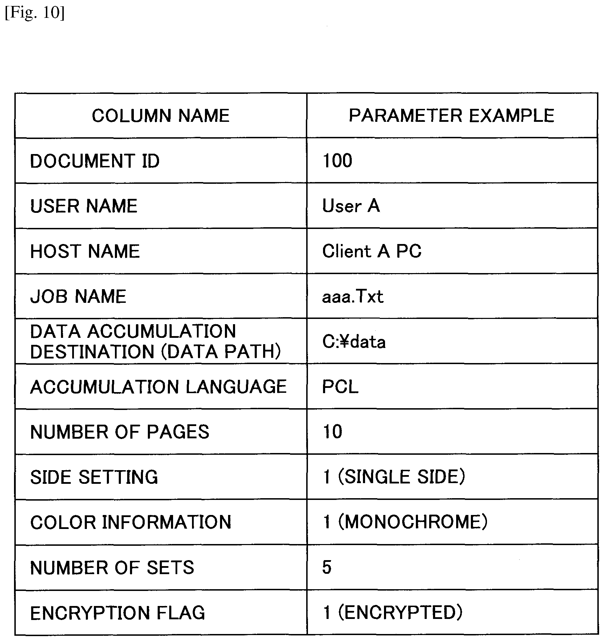

FIG. 10 is a table illustrating an example of the print job information. The print job information includes respective items of a document ID, a user name, a host ID, a job name, a data accumulation destination, an accumulation language, the number of pages, a print-face setting, color information, the number of sets, and an encryption flag.

The document ID is identification information for uniquely identifying each print job. The user name is a name of a user who has registered the print job. The host name is a host name of the client terminal 14 that accumulates the print data of the print job. The job name is a name of a print job such as a document name of the print data. The data accumulation destination is a location or place at which the print data in the intermediate format or the print data in a real format are accumulated.

The accumulation language indicates a format of the accumulated print data. For example, the accumulation language of the print job information being "XPS" indicates the accumulated print data in the intermediate format whereas the accumulation language of the print job information being "PCL" indicates the accumulated print data in the real format. The print data in the intermediate format indicate the print data in a format being easily re-editable and having a common specification and being open source. However, the data format of the print data in the intermediate format is not limited to the XPS. The data format of the print data in the intermediate format may, for example, be a PDF (portable document format) or the like.

On the other hand, the print data in a real format are the print data depending on the image forming apparatus 13. However, the data format of the print data in the real format is not limited to the PCL. The data format of the print data in the real format may, for example, be a PS (postscript) or the like.

The number of pages indicates the number of pages of the print data. The print-face setting indicates the number of print faces of the print data. The color information indicates color information of the print data. The number of sets indicates the number of sets of the print data at printing. The encryption flag indicates information as to whether the print data subject to transmission have been encrypted from the client terminal 14 to the image forming apparatus 13.

The job accumulation processor receives an accumulation request for the print job to store the print job information illustrated in FIG. 10 in the storage 67 of the client terminal 14.

The user who outputs the print job accumulated in the client terminal 14 transmits a login request to the image forming apparatus 13 in step S14. In step S15, the login processor 33 of the image forming apparatus 13 transmits an authentication request to the AD server apparatus 11 based on the login request from the user. The authentication processor 23 of the AD server apparatus 11 performs an authentication process to return an authentication result to the image forming apparatus 13. This case assumes that the authentication result is successful.

In step S16, the login processor 33 of the image forming apparatus 13 transmits a client terminal information request to the AD server apparatus 11. The client terminal information provider 24 of the AD server apparatus 11 provides the image forming apparatus 13 with the client terminal information in association with the successfully authenticated user.

The process up to step S16 allows the image forming apparatus 13 to acquire the client terminal information in association with the user who has logged into the image forming apparatus 13 itself from the AD server apparatus 11. In step S17, the client terminal information cache part 37 of the image forming apparatus 13 caches the client terminal information acquired from the AD server apparatus 11 in association with the user name, as illustrated in FIG. 5.

In step S18, the job information acquisition part 34 of the image forming apparatus 13 transmits a job list acquisition request to the client terminal 14 identified by the client terminal information acquired from the AD server apparatus 11. The job information provider 43 of the client terminal 14 provides the image forming apparatus 13 with print job information. The data display processor 32 of the image forming apparatus 13 displays a job list.

In step S19, the print data acquisition part 36 of the image forming apparatus 13 transmits to the client terminal 14 a print data acquisition request of the print job selected by the user from the job list screen. The job information provider 44 of the client terminal 14 provides the image forming apparatus 13 with print data.

In step S20, the print processor 38 of the image forming apparatus 13 performs a printing process to print the print data from the printer 605 by following the print settings of the print job information.

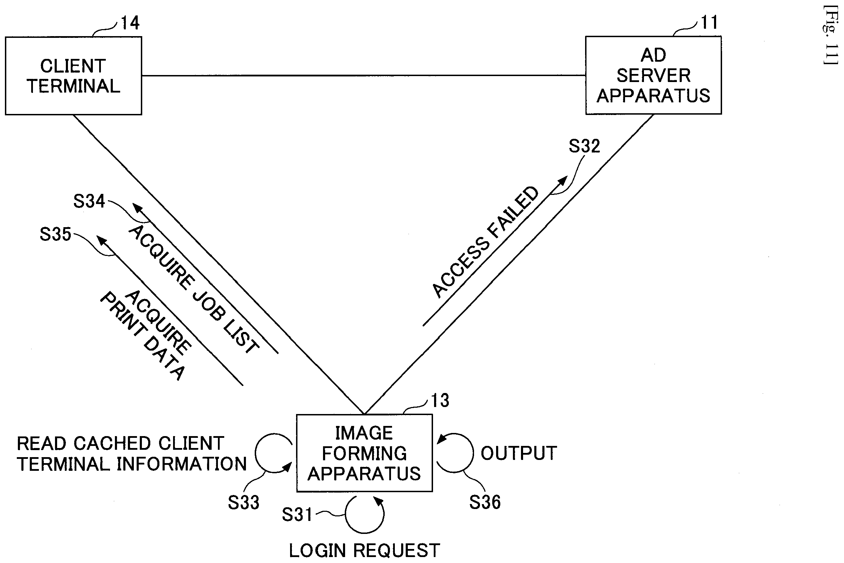

Note that FIG. 9 illustrates the example where the authentication result with respect to the authentication request in step S15 indicates successful authentication. However, when the authentication result with respect to the authentication request in step S15 indicates authentication failure, the print processor 38 will not perform processes subsequent to step S16. When the print processor 38 is unable to receive the authentication result (response) with respect to the authentication request in step S15 due to defect or communications failure of the AD server apparatus 11, the printing system 1 may enable the print processor 38 to acquire the client terminal information by performing a process illustrated in FIG. 11.

FIG. 11 is an explanatory diagram illustrating an example of a printing process performed in the printing system according to the first embodiment. FIG. 11 illustrates processes subsequent to a login request with respect to the image forming apparatus 13.

The user who outputs the print job accumulated in the client terminal 14 transmits a login request to the image forming apparatus 13 in step S31. In step S32, it is assumed that the login processor 33 of the image forming apparatus 13 transmits an authentication request to the AD server apparatus 11 based on the login request from the user, but fails to access the AD server apparatus 11, and fails to acquire the authentication result.

In step S33, the login processor 33 of the image forming apparatus 13 acquires the client terminal information in association with the user who has transmitted the login request from the client terminal information cached in the client terminal information cache part 37.

The process up to step S33 enables the image forming apparatus 13 to acquire the client terminal information of the user that has been cached in the client terminal information cache part 37 even when the image forming apparatus 13 is unable to acquire the authentication result from the AD server apparatus 11.

In step S34, the job information acquisition part 34 of the image forming apparatus 13 transmits a job list acquisition request to the client terminal 14 identified by the client terminal information acquired from the client terminal information cache part 37. The job information provider 43 of the client terminal 14 provides the image forming apparatus 13 with print job information. The data display processor 32 of the image forming apparatus 13 displays a job list.

In step S35, the print data acquisition part 36 of the image forming apparatus 13 transmits to the client terminal 14 a print data acquisition request of the print job selected by the user from the job list screen. The job information provider 44 of the client terminal 14 provides the image forming apparatus 13 with print data.

In step S36, the print processor 38 of the image forming apparatus 13 performs a printing process to print the print data from the printer 605 by following the print settings of the print job information.

The printing system 1 according to the first embodiment allows the image forming apparatus 13 to cache the client terminal information acquired from the AD server apparatus 11 when the authentication result of the AD server apparatus 11 indicates successful authentication. The printing system 1 according to the first embodiment may enable the image forming apparatus 13 to specify the client terminal 14 that accumulates the print job information or the print data by referring to the cached client terminal information even when the image forming apparatus 13 is unable to acquire the authentication result from the AD server apparatus 11.

The printing system 1 according to the first embodiment may allow output of the print data even when the AD server apparatus 11 has defect or communications failure, thereby implementing redundancy in the user authentication process.

### SETTING PROCESS

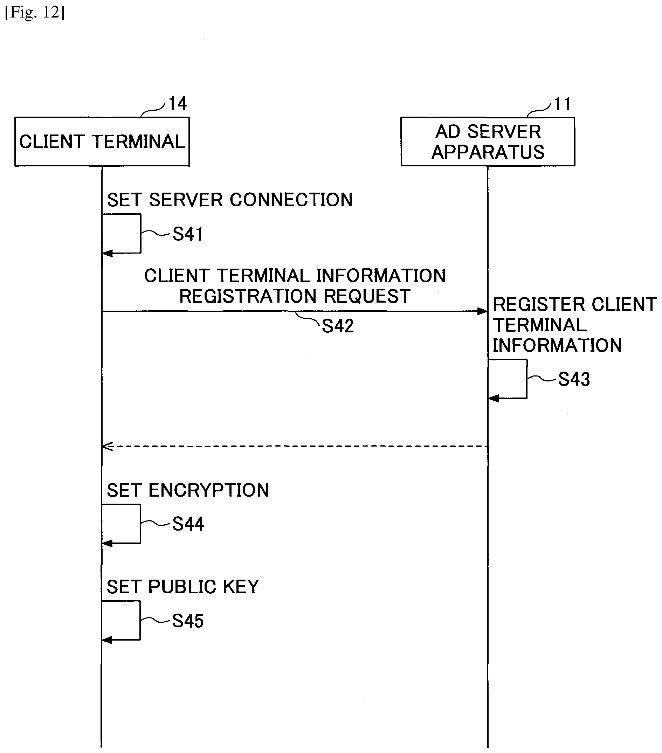

The setting processor 41 of the client terminal 14 performs a process relating to necessary settings for accumulation printing in the printing system 1 by following, for example, a process illustrated in FIG. 12. FIG. 12 is a sequence diagram illustrating an example of a setting process.

In step S41, the setting processor 41 of the client terminal 14 performs settings for accessing the AD server apparatus 11 (server connection settings). Note that the setting processor 41 may also perform various types of settings necessary for accessing the printing system 1 other than the server connection settings.

In step S42, the setting processor 41 receives a registration instruction of the client terminal information from the user, and transmits registration request of the client terminal information to the AD server apparatus 11. In step S43, the client terminal information registration processor 21 of the AD server apparatus 11 causes the client terminal information holder 22 to hold the client terminal information in association with the user name, as illustrated in FIG. 5.

In step S44, the setting processor 41 of the client terminal 14 receives an encryption setting for the print job from the user. The encryption setting of step S44 includes setting whether to encrypt the print data transmitted from the client terminal 14 to the image forming apparatus 13. The encryption setting for the print job may be set by the user via an encryption selection screen 1000 illustrated in FIG. 13.

FIG. 13 is an image diagram illustrating an example of the encryption selection screen 1000. The encryption selection screen 1000 of FIG. 13 is used for setting whether to encrypt the print data transmitted from the client terminal 14 to the image forming apparatus 13.

In step S44, when "encrypt" is set, the setting processor 41 proceeds with step S45 to set a public key of the user so as to encrypt an encryption key for use in encrypting the print data. Note that the example illustrates the print data being subject to encryption; however, the print job information may be encrypted instead to transmit the encrypted print job information.

When the client terminal information is changed, the registration instruction of the client terminal information in step S42 may be transmitted at the time at which the client terminal information has changed. The registration instruction of the client terminal information may be transmitted every predetermined time (e.g., per minute).

### ENCRYPTION IN CLIENT TERMINAL

The job accumulation plugin 71 of the client terminal 14 encrypts the print data as follows. The job accumulation plugin 71 of the client terminal 14 initially receives a print job accumulation process (a print instruction for selecting a virtual printer driver 62) from the user.

The job accumulation plugin 71 generates a one-time symmetric key as an "encryption key for use in encrypting the print data". The job accumulation plugin 71 encrypts the print data with the generated one-time symmetric key. The job accumulation plugin 71 acquires the public key of the user from the AD server apparatus 11.

The job accumulation plugin 71 encrypts the one-time symmetric key used in encrypting the print data with the public key of the user. The job accumulation plugin 71 stores the print job information, the encrypted print data and the encrypted one-time symmetric key in the storage 67. Note that this example utilizes the unencrypted print job information; however, the print job information may also be encrypted with the one-time symmetric key.

### DECRYPTION IN IMAGE FORMING APPARATUS

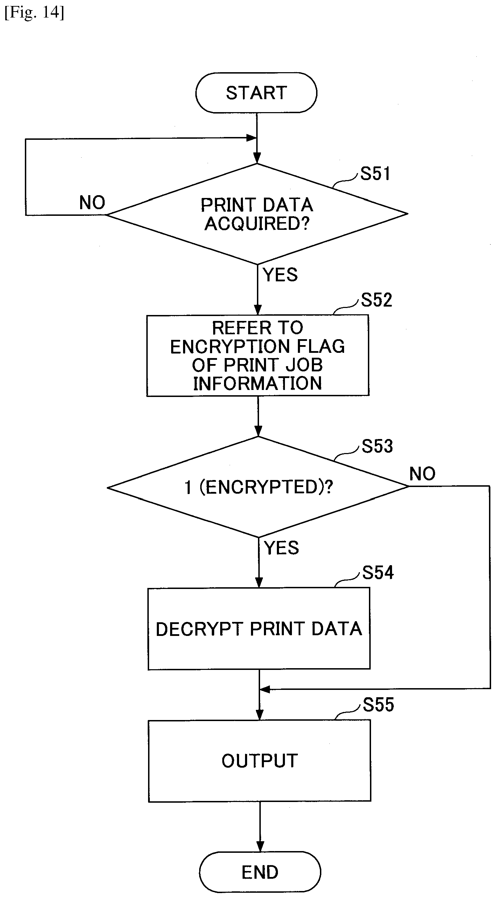

The print processor 38 of the image forming apparatus 13 determines whether the print data acquired from the client terminal 14 is encrypted as illustrated in FIG. 14 to decrypt the print data. FIG. 14 is a flowchart illustrating an example of a printing process performed by a print processor.

In step S51, when the print processor 38 of the image forming apparatus 13 acquires the print data from the client terminal 14, the print processor 38 proceeds with processes subsequent to step S52. In step S52, the print processor 38 refers to an encryption flag illustrated in FIG. 10. In step S53, the print processor 38 determines whether the acquired print data is encrypted based on the encryption flag of the print job information that the print processor 38 refers to.

When the acquired print data are encrypted, the print processor 38 proceeds with step S54 to decrypt the print data. In step S54, the print processor 38 decrypts with a secret key of the user a "one time symmetric key used in encrypting the print data" that has been encrypted with the public key of the user. The secret key of the user may be read from the authentication card or the like for use in the login request transmitted to the image forming apparatus 13. The print processor 38 decrypts the encrypted print data with the decrypted "one time symmetric key used in encrypting the print data".

When the acquired print data are unencrypted, the print processor 38 skips step S54. In step S55, the print processor 38 performs a printing process to print the print data with the printer 605 by following the print settings of the print job information.

The image forming apparatus 13 may determine whether the print data acquired from the client terminal 14 are encrypted, decrypt the print data when the print data are encrypted, and print the decrypted print data as described above.

### PROCESS OF PREVENTING UNAUTHORIZED ACQUISITION OF PRINT DATA

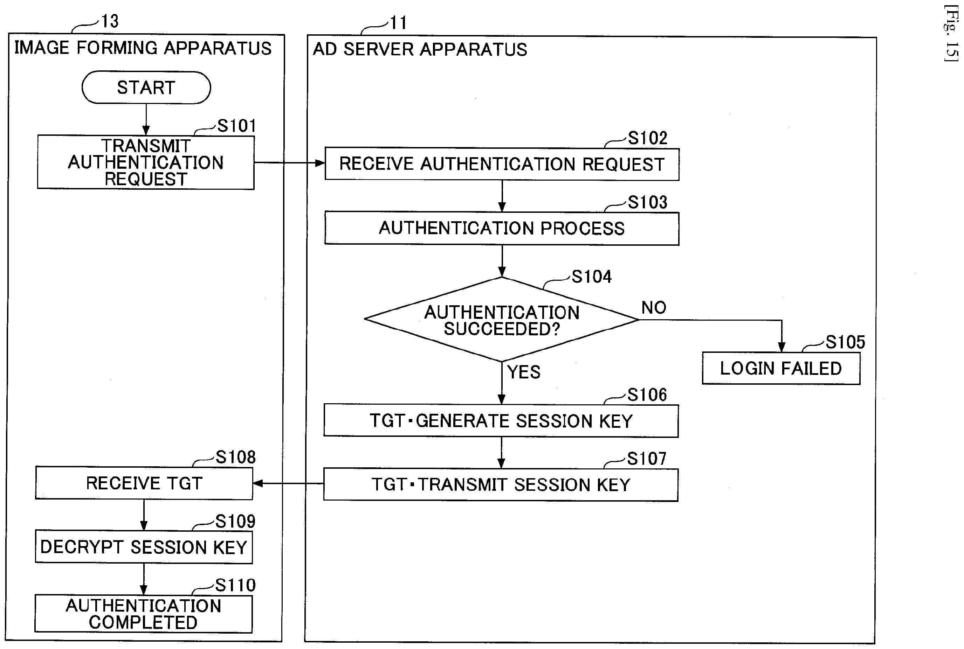

The print system 1 according to the first embodiment allows the image forming apparatus 13 to acquire, during the login process, a ticket granting ticket (hereinafter called "TGT") for preventing unauthorized acquisition of the print data due to spoofing as illustrated in FIG. 15. FIG. 15 is a flowchart illustrating an example of a TGT acquisition process in the image forming apparatus 13.

In step S101, the operations receiver 31 of the image forming apparatus 13 receives the authentication information such as a user name, a password, and the like input by the user via the login screen. The login processor 33 of the image forming apparatus 13 transmits the received authentication information to the AD server apparatus 11.

In step S102, the AD server apparatus 11 receives the authentication information from the image forming apparatus 13. In step S103, the authentication server of the AD server apparatus 11 performs an authentication process on the authentication information received from the image forming apparatus 13.

When the authentication fails ("NO" in step S104), the authentication server of the AD server apparatus 11 determines that the login has failed in step S105. When the authentication has succeeded ("YES" in step S104), the authentication server of the AD server apparatus 11 proceeds with step S106 to generate a TGT and a session key including an expiration date of the TGT.

In step S107, the authentication server of the AD server apparatus 11 encrypts the TGT with a key held by the ticket granting server, and further encrypts the session key with a key held by the image forming apparatus 13. The authentication server of the AD server apparatus 11 transmits the encrypted TGT and the encrypted session key to the image forming apparatus 13.

In step S108, the login processor 33 of the image forming apparatus 13 receives the encrypted TGT and the encrypted session key from the AD server apparatus 11. In step S109, the login processor 33 of the image forming apparatus 13 causes the AD server apparatus 11 to decrypt the session key to acquire the session key. Note that the key used for encrypting the session key may be the user's password, the user's public key, and the like. In step S110, the login processor 33 of the image forming apparatus 13 completes the authentication.

In the TGT acquisition process in FIG. 15, the image forming apparatus 13 serving as a principal transmits a ticket request to the authentication server to acquire the TGT encrypted with the key held by the ticket granting server in Kerberos authentication. After the acquisition of the TGT, the image forming apparatus 13 is able to use the TGT. The image forming apparatus 13 thus no longer requires the authentication process using the authentication information such as the user name, the password, and the like.

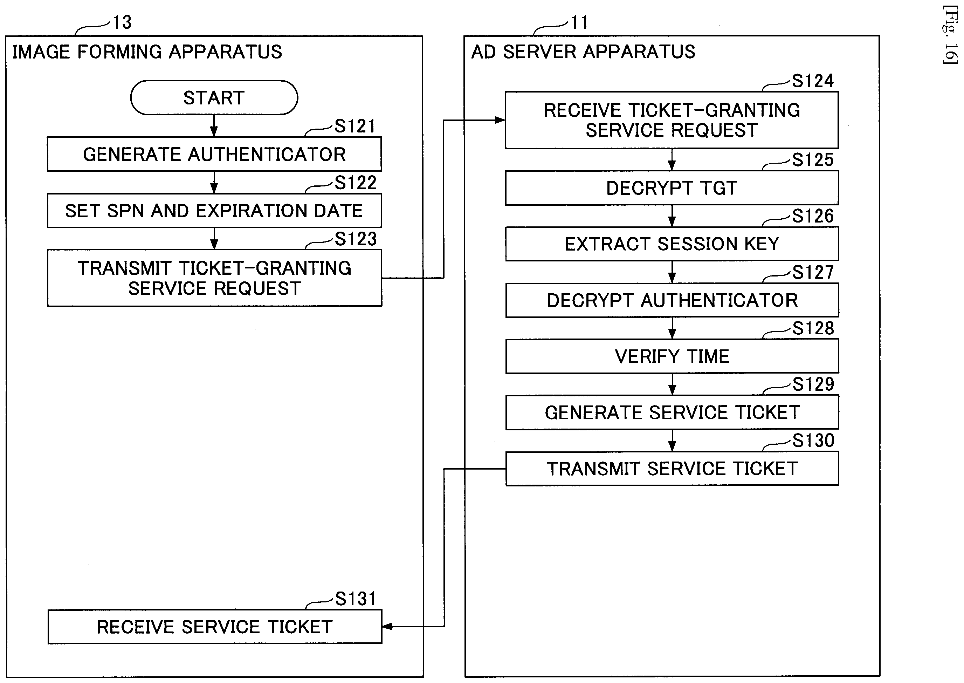

The print system 1 according to the first embodiment allows the image forming apparatus 13 to acquire a service ticket (TGS) indicating access authorization with respect to the client terminal 14 using the TGT as illustrated, for example, in FIG. 16. FIG. 16 is a flowchart illustrating an example of a service ticket acquisition process in the image forming apparatus 13.

In step S121, the image forming apparatus 13 generates an authenticator uniquely identifying a client based on the time and the user principal information. Note that the user principal information is set to uniquely identify the user on the AD (Active Directory). The image forming apparatus 13 encrypts the generated authenticator with the session key acquired in the TGT acquisition process.

In step S122, the image forming apparatus 13 sets a service principal name associated with a service registered by the client terminal 14 on the AD, and expiration date of the service ticket to be acquired this time. In step S123, the image forming apparatus 13 transmits a ticket granting service request to the ticket granting server of the AD server apparatus 11.

The ticket granting service request includes the encrypted authenticator, the TGT encrypted with the key held by the ticket granting server, the set service principal name, and the expiration date of the service ticket to be acquired this time.

In step S124, the ticket granting server of the AD server apparatus 11 receives the ticket granting service request. In step S125, the ticket granting server of the AD server apparatus 11 decrypts the encrypted TGT with the key held by itself (the AD server apparatus 11) to perform an authentication process on the TGT. When the authentication process of TGT has succeeded, the ticket granting server of the AD server apparatus 11 extracts the session key from the TGT in step S126.

In step S127, the ticket granting server of the AD server apparatus 11 decrypts the encrypted authenticator included in the ticket granting service request using the extracted session key. In step S128, the ticket granting server of the AD server apparatus 11 also checks the time. The above-described processes enable the ticket granting server of the AD server apparatus 11 to specify the user.

In step S129, the ticket granting server of the AD server apparatus 11 generates a service ticket of a service registered by the client terminal 14 via the active directory (AD). The ticket granting server of the AD server apparatus 11 encrypts the service ticket with a key held by the client terminal 14. The ticket granting server encrypts a session key of the client terminal 14 with the session key acquired by the image forming apparatus 13 in the TGT acquisition process.

In step S130, the ticket granting server of the AD server apparatus 11 transmits the encrypted service ticket and the session key of the client terminal 14 to the image forming apparatus 13. In step S131, the login processor 33 of the image forming apparatus 13 receives the encrypted service ticket and the encrypted session key from the AD server apparatus 11.

The login processor 33 of the image forming apparatus 13 decrypts the session key of the client terminal 14 encrypted by the AD server apparatus 11 to acquire the session key of the client terminal 14.

The service ticket acquisition process illustrated in FIG. 16 causes the image forming apparatus 13 serving as the principal to transmit the TGT to request the service ticket, and subsequently acquire the service ticket encrypted with the key held by the client terminal 14.

After the acquisition of the service ticket, the image forming apparatus 13 converts the service ticket into an authentication token, and provides the authentication token while performing communications with the client terminal 14, thereby verifying the user subject to authentication being a correct user.

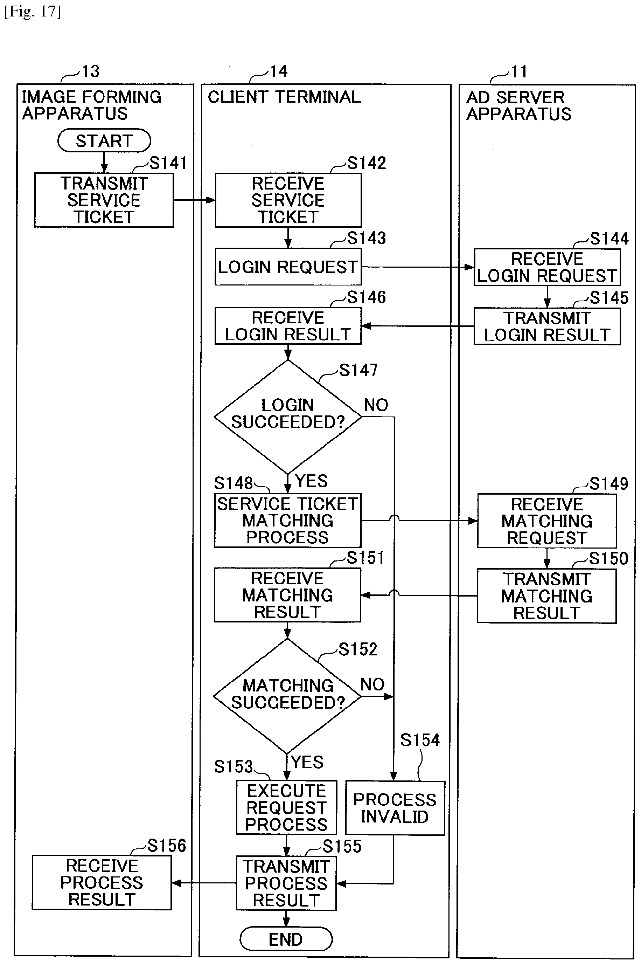

The print system 1 of the embodiment allows the client terminal 14 that has received the authentication token to perform, for example, a process as illustrated in FIG. 17. FIG. 17 is a flowchart illustrating an example of an authentication token matching process in the client apparatus 14.

In step S141, the image forming apparatus 13 provides the service ticket encrypted with the key held by the client terminal 14 and the authenticator encrypted with the session key of the client terminal 14 as an authentication token to request the client terminal 14 to perform the process.

In step S142, the client terminal 14 receives the encrypted service ticket, and decrypts the received service ticket with the key held by itself (the client terminal 14) to acquire the service ticket. In step S143, the print server apparatus 14 transmits a login request to the AD server apparatus 11 using a pre-generated keytab file.

The keytab file is used by the client terminal 14 to verify that the service provided by itself (the client terminal 14) is appropriate service provided via the active directory (AD). The client terminal 14 may be able to transmit a login request to the AD server apparatus 11 using the keytab file pre-registering a service provided by the client terminal 14 itself on the active directory (AD). The client terminal 14 transmits a login request with a user name determined at the registration of the service principal name.

In step S144, the authentication server of the AD server apparatus 11 receives the login request from the client terminal 14. In step S145, the authentication server of the AD server apparatus 11 performs the login process in response to the received login request to verify whether the keytab file is an authorized or an unauthorized one.

When the AD server apparatus 11 verifies that the keytab file is an authorized one, the AD server apparatus 11 transmits a login result representing the successful login to the client terminal 14. On the other hand, when the AD server apparatus 11 verifies that the keytab file is an unauthorized one, the AD server apparatus 12 transmits a login result representing the unsuccessful login (login failure) to the client terminal 14.

In step S146, the client terminal 14 receives a login result. When the client terminal 14 receives the login result representing the login failure ("NO" in step S147), the client terminal 14 proceeds with step S154. In step S154, the client terminal 14 determines that the requested login process is an unauthorized process. In step S155, the client terminal 14 transmits a process result representing the unauthorized process to the image forming apparatus 13. In step S156, the image forming apparatus 13 receives the process result representing the unauthorized process.

On the other hand, when the client terminal 14 receives the login result representing the successful login ("YES" in step S147), the client terminal 14 proceeds with step S148. In step S148, the client terminal 14 performs a matching process of the service ticket acquired in step S142.

Specifically, the client terminal 14 extracts the session key of the client terminal 14 from the service ticket acquired in step S142. The client terminal 14 decrypts the encrypted authenticator included in the service ticket acquired in step S142 using the extracted session key of the client terminal 14.

The client terminal 14 transmits to an authentication server of the AD server apparatus 11a matching process request to verify whether the decrypted authenticator is present in the active directory (AD). In step S149, the authentication server of the AD server apparatus 11 receives the matching request of the authenticator.

In step S150, the authentication server of the AD server apparatus 11 verifies whether the authenticator is present within the active directory (AD), and transmits, when the authenticator is present in the AD, a matching result representing successful matching to the client terminal 14. On the other hand, the authentication server of the AD server apparatus 11 transmits, when the authenticator is not present in the AD, a matching result representing unsuccessful matching (matching failure) to the client terminal 14.

In step S151, the client terminal 14 receives a login result. When the client terminal 14 receives the matching result representing the matching failure ("NO" in step S152), the client terminal 14 proceeds with step S154. In step S154, the client terminal 14 determines that the requested login process is an unauthorized process. In step S155, the client terminal 14 transmits a process result representing the unauthorized process to the image forming apparatus 13. In step S156, the image forming apparatus 13 receives the process result representing the unauthorized process.

When the client terminal 14 receives the matching result representing the successful matching from the AD server apparatus 11 ("YES" in step S152), the client terminal 14 determines the user subject to authentication as a valid user, and subsequently proceeds with step S153. The client terminal 14 executes the process requested in step S142. In step S155, the client terminal 14 transmits the process result obtained in step S153 to the image forming apparatus 13. In step S156, the image forming apparatus 13 receives the process result obtained in step S153.

The authentication token matching process in FIG. 17 indicates that the image forming apparatus 13 serving as a principal transmits a process request to the client terminal 14 using a service ticket. Note that FIG. 17 illustrates an example of the authentication token matching process indicating that the image forming apparatus 13 transmits a process request to the client terminal 14; however, the example also includes the authentication token matching process indicating that the image forming apparatus 13 transmits the process request to the print server apparatus 16. The authentication token matching process in FIG. 17 may enable the print system 1 of the embodiment to control spoofing attacks from malicious users.

The login process illustrated in FIG. 13 employs the user name and the password as the authentication information of the user. However, the login process may use registration information of the IC card. The login process utilizing the registration information of the IC card may be implemented, for example, by pre-registering the registration information of the IC card in association with information specifying a user such as the user name in the user information holding part 52.

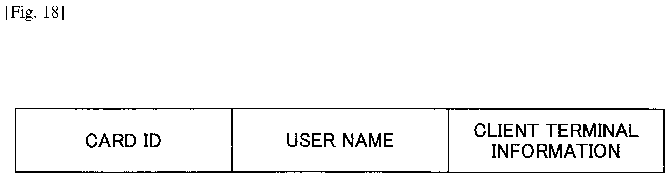

When the registration information of the IC card that is unassociated with the information specifying the user is utilized in the login process, a registration process for associating the registration information of the IC card with the information specifying the user such as the user name may be received from the image forming apparatus 13. For example, when a process utilizing the registration information of the IC card is performed, the client terminal information holder 22 of the AD server apparatus 11 holds the client terminal information in association with the card ID and the user name as illustrated in FIG. 18.

FIG. 18 is a configuration diagram illustrating another example of client terminal information held by the client terminal information holder. A card ID is an example of identification information that uniquely identifies an IC card. A user name is an example of identification information that uniquely identifies a user. Client terminal information is an example of identification information that uniquely identifies the client terminal 14. Note that the IC card may register a secret key of the user.

### OUTLINE

The printing system 1 according to the first embodiment may allow the image forming apparatus 13, which has acquired client terminal information from the AD server apparatus 11, to cache the client terminal information in association with the user name, thereby implementing redundancy of the client terminal information.

The print system 1 according to the first embodiment may allow the image forming apparatus 13 to acquire the service ticket from the AD server apparatus 11 every time the image forming apparatus 13 performs the communications with the client terminal 14, thereby lowering risks of receiving spoofing attacks.

The print system 1 of the first embodiment may encrypt the print data using the public key encryption system in the print data acquisition process. The client terminal 14 may be able to transmit the encrypted print data to the image forming apparatus 13. The print system 1 of the embodiment may thus be able to control risks of print data leakage by performing the encryption process of the print data even if the unauthorized acquisition of the print data has been attempted.

The print system 1 of the first embodiment may allow the image forming apparatus 13 to acquire a unique authentication token every time the image forming apparatus 13 performs communications with the client terminal 14, and attaches the acquired authentication token to the communications with the client terminal 14. The image forming apparatus 13 subsequently conducts a matching process and analysis on the authentication token attached to the communications with the client terminal 14, and subsequently transmits (returns), when the user is determined as a valid user, a communication response. The print system 1 of the first embodiment may thus be able to prevent spoofing attacks by malicious users.

Note that the authentication token may be attached to header information of the communications request. Thus, it may be preferable for the print system 1 of the embodiment to implement HTTPS communications using SSL in order to conceal the communications content.

### SECOND EMBODIMENT

The pull printing system 1 according to the first embodiment has a configuration having no print server apparatus. A pull printing system 1 according to a second embodiment further includes a print server apparatus 16 and a mail server apparatus 17 that are added to the configuration of the printing system 1 according to the first embodiment.

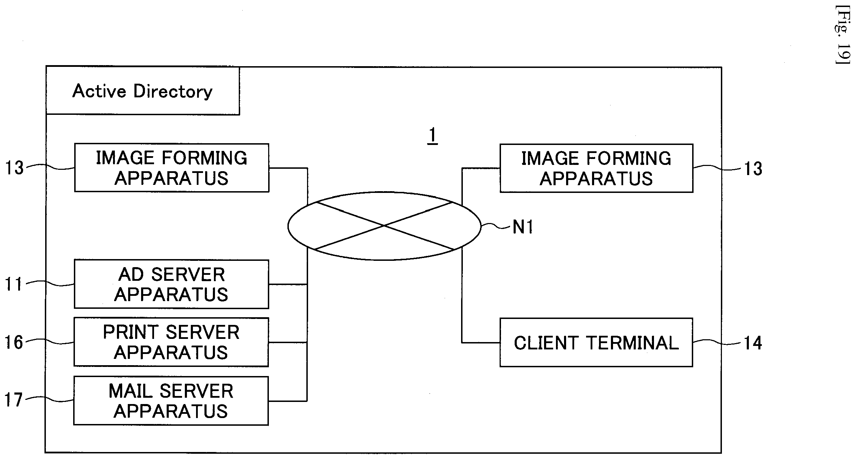

FIG. 19 is a configuration diagram illustrating an example of the printing system 1 according to the second embodiment. The mail server apparatus 17 in the printing system 1 of FIG. 19 is configured to receive submission of a print job attached to a mail from a terminal apparatus such as a mobile terminal of a user. The print server apparatus 16 is configured to accumulate print job information and print data of the print job submitted via the mail.

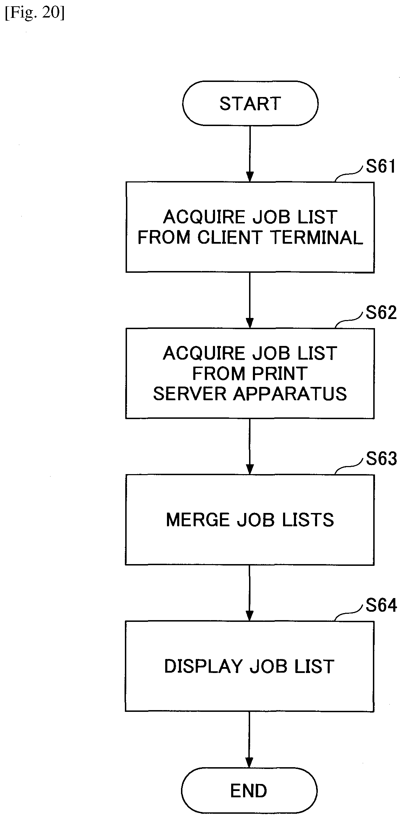

The image forming apparatus 13 in the printing system 1 of FIG. 19 is configured to display a job list by following a process illustrated in FIG. 20. FIG. 20 is a flowchart illustrating an example of a job list display process.

In step S61, the job information acquisition part 34 of the image forming apparatus 13 acquires a job list from the client terminal 14 by following the process similar to that of the first embodiment. In step S62, the job information acquisition part 34 of the image forming apparatus 13 acquires from the print server apparatus 16 a job list of print jobs accumulated in the print server apparatus 16.

In step S63, the job information acquisition part 34 of the image forming apparatus 13 merges two job lists, that is, the job list acquired in step S61 and the job list acquired in step S62. In step S64, the data display processor 32 displays a job list screen of the job list merged in step S63.

The printing system 1 according to the second embodiment enables the image forming apparatus 13 to display the job list merging the two job lists that are managed by the client terminal 14 and the print server apparatus 16, respectively.

### OUTLINE

The printing system 1 according to the second embodiment enables the image forming apparatus 13 to display the merged job list even of the different print job lists are accumulated in two or more print job accumulation destinations.

The present invention is not limited to examples or embodiments disclosed above. Various modifications or alteration may be made without departing from the scope of the claims of the present invention.

Note that the above-described print system 1 is an example of an output system and the scope of the present invention is not limited to printing applications. The scope of the present invention is, therefore, not limited to the output system that handles print data or print job information alone. The client terminal 14 is an example of a terminal apparatus used by a user based on the instructions of the output request or output process of the output data.

The client terminal 14 is an example of a terminal apparatus disclosed in the claims. The AD server apparatus 11 is an example of an authentication apparatus disclosed in the claims. The image forming apparatus 13 is an example of an output apparatus disclosed in the claims. The client terminal information is an example of terminal apparatus information disclosed in the claims. The login processor 33 is an example of an authentication request unit. The client terminal information cache part 37 is an example of a terminal apparatus information accumulation unit. The print data acquisition part 36 is an example of an output data acquisition unit. The print processor 38 is an example of an output processor. The job information acquisition part 34 is an example of an output data information acquisition unit.

The job selection receiver 35 is an example of an output data selection receiver. The ticket is an example of certificate information. The service ticket matching request is an example of a validity determination request. The service ticket matching result is an example of a validity determination result.

### Reference Signs List

1 print system
11 active directory server (AD server) apparatus
13 image forming apparatus
14 Client terminal
16 print server apparatus
17 mail server apparatus
21 client terminal information registration processor
22 client terminal information holder
23 authentication processor
24 client terminal information provider
25 ticket granting part
26 key manager
31 operations receiver
32 data display processor
33 login processor
34 job information acquisition part
35 job selection receiver
36 print data acquisition part
37 client terminal information cache part
38 processor
41 setting processor
42 job accumulation processor
43 job information provider
44 print data provider
61 document creating application
62 virtual printer driver
63 real printer driver
64 plugin
65 platform API
66 platform
67 storage
71 job accumulation plugin
81 display controller (UI controller)
82 setting part
83 communications part
500 computer
501 input device
502 display device
503 communications I/F
503a recording medium
504 RAM
505 ROM
506 CPU
507 communications I/F
508 HDD
601 controller 601
602 operations panel
603 communications I/F
603a recording medium
604 communications I/F
605 printer
606 scanner
611 CPU
612 RAM
613 ROM
614 NVRAM
615 HDD
B Bus
N1 network N1

## Claims

1. An output apparatus (13) configured to perform communications with a terminal apparatus (14) and an authentication apparatus (11), the output apparatus (13) comprising:
an authentication request unit (33) configured to transmit an authentication request of a user to the authentication apparatus (11) to acquire, when authentication of the user has succeeded, terminal apparatus information in association with the user;
a terminal apparatus information accumulation unit (37) configured to accumulate the acquired terminal apparatus information in association with the user;
an output data acquisition unit (36) configured to acquire output data accumulated in the terminal apparatus (14) from the terminal apparatus (14) specified by the acquired terminal apparatus information in association with the user; and
an output processor (38) configured to perform an output process to output the output data, wherein
the output data acquisition unit (36) is configured to acquire, upon failing to acquire a response to the authentication request of the user from the authentication apparatus (11), the output data accumulated in the terminal apparatus (14) from the terminal apparatus (14) specified by the terminal apparatus information in association with the user, and
the output data is obtained from the terminal apparatus (14) that is specified by the terminal apparatus information in association with the user, the terminal apparatus information having been accumulated in the terminal apparatus information accumulation unit (37) when authentication of the user had succeeded.

2. The output apparatus (13) according to claim 1, further comprising:
an output data information acquisition unit (34) configured to acquire output data information relating to the output data accumulated in the terminal apparatus (14) from the terminal apparatus (14) specified by the acquired terminal apparatus information in association with the user; and
an output data selection receiver (35) configured to receive from the user a selected one of the output data acquired from the terminal apparatus (14) based on the acquired output data information.

3. The output apparatus (13) according to claim 2, wherein
when output data acquired from the terminal (14) is determined to be encrypted based on information indicating whether the output data included in the output data information relating to the output data has been encrypted, the output processor (38) is configured to perform an output process of the output data after the output data have been decrypted.

4. The output apparatus (15) according to any one of claims 1 to 3, wherein
the authentication request unit (33) is configured to transmit a certificate information providing request indicating access authorization for the output apparatus (13) to access the terminal apparatus (14) to the authentication apparatus (11), to acquire the certificate information, and transmit a process request with the certificate information to the terminal apparatus (14).

5. The output apparatus (13) according to claim 4, wherein
the authentication performed by the authentication apparatus (11) is Kerberos authentication.

6. An output system (1) comprising: a terminal apparatus (14); an output apparatus (13) according to claim 1; and an authentication apparatus (11), the terminal apparatus (14), the output apparatus (12) and the authentication apparatus (11) being connected via a network (N1), wherein
the authentication apparatus (11) includes
an authentication processor (23) configured to perform an authentication process of a user;
a terminal apparatus information holder (22) configured to hold terminal apparatus information in association with the user;
a terminal apparatus information provider (24) configured to provide the output apparatus (13) with the terminal apparatus information in association with the user who has successfully been authenticated by the authentication processor (23), as a response to an authentication request from the successfully authenticated user.

7. The output system (1) according to claim 6, wherein
the terminal apparatus (14) includes
an output data accumulation processor (42) configured to accumulate output data;
an output data provider (44) configured to provide the output apparatus (13) with the output data based on an output data acquisition request from the output apparatus (13); and
a setting processor (41) configured to transmit a registration request of the terminal information in association with the user to the authentication apparatus (11), and register the terminal information in association with the user in the authentication apparatus (11).

8. The output system (1) according to claim 7, wherein
the setting processor (41) is configured to transmit the registration request of the terminal information in association with the user when the terminal information has changed, or every predetermined time.

9. The output apparatus according to any one of claims 6 to 8, wherein
the authentication apparatus (11) includes
a certificate information provider configured to provide the output apparatus (13) with certificate information indicating access authorization for authorizing the output apparatus (13) to access the terminal apparatus (14); and
a validity determination result provider configured to receive a validity determination request of the certificate information from the terminal apparatus (14), and provide a validity determination result of the certificate information to the terminal apparatus (14), wherein
the output apparatus (13) includes
a certificate information request unit configured to transmit a certificate information providing request to request the authentication apparatus to provide the certificate information; and
a process request unit configured to transmit a process request to the terminal apparatus (14) by attaching the certificate information provided from the authentication apparatus (11) to the process request, and wherein
the terminal apparatus (14) includes
a validity determination request unit configured to transmit a validity determination request of the certificate information attached to the process request from the output apparatus (13) to the authentication apparatus (11); and
a process execution unit configured to perform a process in response to a request from the output apparatus (13) when a validity determination result of the certificate information provided from the authentication apparatus (11) indicates that the certificate information is valid.

10. An output method executed in an output system (1), the output system (1) including a terminal apparatus (14); an output apparatus (13); and an authentication apparatus (11), the terminal apparatus (14), the output apparatus (3) and the authentication apparatus (11) being connected via a network (11), the output method comprising:
causing the authentication apparatus (11) to
perform an authentication process of a user,
hold terminal apparatus information in association with the user, and
provide the output apparatus (13) with the terminal apparatus information in association with the user who has successfully been authenticated in the authentication process performed, as a response to an authentication request from the successfully authenticated user; and
causing the output apparatus (13) to
transmit the authentication request of the user to the authentication apparatus (11) to acquire, when authentication of the user has succeeded, the terminal apparatus information in association with the user,
accumulate the acquired terminal apparatus information in association with the user,
acquire output data accumulated in the terminal apparatus (14) from the terminal apparatus (14) specified by the acquired terminal apparatus information in association with the user, and
perform an output process to output the output data, wherein
upon failing to acquire a response to the authentication request of the user from the authentication apparatus (11), the output data accumulated in the terminal apparatus (14) are acquired from the terminal apparatus (14) specified by the terminal apparatus information in association with the user, and
the output data is obtained from the terminal apparatus (14) that is specified by terminal apparatus information in association with the user, the terminal apparatus information having been accumulated when authentication of the user had succeeded.

## Patentansprüche

1. Ausgabevorrichtung (13), die eingerichtet ist, Kommunikation mit einem Endgerät (14) und einer Authentifizierungsvorrichtung (11) durchzuführen, wobei die Ausgabevorrichtung (13) enthält:
eine Authentifizierungsanfrageeinheit (33), die eingerichtet ist, eine Authentifizierungsanfrage eines Benutzers an die Authentifizierungsvorrichtung (11) zu übertragen, um, wenn die Authentifizierung des Benutzers erfolgreich war, Endgerätinformationen in Zusammenhang mit dem Nutzer einzulesen;
eine Endgeräteinformationsakkumulierungseinheit (37), die eingerichtet ist, die eingelesenen Endgerätinformationen in Zusammenhang mit dem Benutzer zu akkumulieren;
eine Ausgabedateneinleseeinheit (36), die eingerichtet ist, Ausgabedaten, die in dem Endgerät (14) akkumuliert sind, von dem Endgerät (14), von den eingelesenen Endgeräteinformationen in Zusammenhang mit dem Benutzer spezifiziert wird, einzulesen; und
eine Ausgabeprozessor (38), der eingerichtet ist, einen Ausgabevorgang zum Ausgeben der Ausgabedaten durchzuführen, wobei die Ausgabedateneinleseeinheit (36) eingerichtet ist, wenn eine Antwort auf die Authentifizierungsanfrage des Benutzers von der Authentifizierungsvorrichtung (11) nicht erhalten wird, die in dem Endgerät (14) von akkumulierten Ausgabedaten von dem Endgerät (14), das von den Endgeräteinformationen in Zusammenhang mit dem Benutzer spezifiziert wird, einzulesen, und
die Ausgabedaten von dem Endgerät (14), das von den Endgeräteinformationen in Zusammenhang mit dem Benutzer spezifiziert wird, erhalten werden, wobei die Endgeräteinformationen in der Endgeräteinformationenakkumulierungseinheit (37) akkumuliert worden sind, wenn die Authentifizierung des Benutzers erfolgreich gewesen war.

2. Ausgabevorrichtung (13) gemäß Anspruch 1, ferner enthalten:
eine Ausgabedateninformationseinleseeinheit (34), die eingerichtet ist, Ausgabedateninformationen von den eingelesenen Endgeräteinformationen in Zusammenhang mit dem Benutzer spezifizierten Endgerät (14) einzulesen, die sich auf die in dem Endgerät (14) akkumulierten Ausgabedaten beziehen; und
einen Ausgabedatenauswahlempfänger (35), der eingerichtet ist von dem Benutzer eine Auswahl aus den von dem Endgerät (14) basierend auf den eingelesenen Ausgabedateninformationen eingelesenen Ausgabedaten von dem Benutzer zu empfangen.

3. Ausgabevorrichtung (13) gemäß Anspruch 2, bei der, wenn von dem Endgerät (14) eingelesene Ausgabedaten dazu bestimmt werden, basierend auf Informationen, die anzeigen, ob die in den Ausgabedateninformationen, die sich auf die Ausgabedaten beziehen, enthaltenen Ausgabedaten verschlüsselt worden sind, verschlüsselt zu werden, der Ausgabeprozessor (38) eingerichtet ist, einen Ausgabevorgang der Ausgabedaten durchzuführen, nachdem die Ausgabedaten entschlüsselt worden sind.

4. Ausgabevorrichtung (15) gemäß irgendeinem der Ansprüche 1 bis 3, bei der di
e Authentifizierungsanfrageeinheit (33) eingerichtet ist, eine Zertifikatinformationsbereitstellungsanfrage zu übertragen, die eine Zugangsberechtigung für die Ausgabevorrichtung (13) zum Zugang zu dem Endgerät (14) anzeigt, an die Authentifizierungsvorrichtung (11) zu übertragen, die Zertifikatinformationen einzulesen und eine Prozessanfrage mit den Zertifikatinformationen an das Endgerät (14) zu übertragen.

5. Ausgabevorrichtung (13) gemäß Anspruch 4, bei der
die von der Authentifizierungsvorrichtung (11) durchgeführte Authentifizierung eine Kerberos-Authentifizierung ist.

6. Ausgabesystem (1) enthaltend:
ein Endgerät (14);
einen Ausgabevorrichtung (13) gemäß Anspruch 1;
und eine Authentifizierungsvorrichtung (11), wobei das Endgerät (14), die Ausgabevorrichtung (12) und die Authentifizierungsvorrichtung (11) über ein Netzwerk (N1) verbunden sind, wobei
die Authentifizierungsvorrichtung (11) enthält:
einen Authentifizierungsprozessor (23), der eingerichtet ist, einen Authentifizierungsprozess eines Benutzers durchzuführen;
einen Endgeräteinformationenhalter (22), der eingerichtet ist, Endgeräteinformationen in Zusammenhang mit dem Benutzer aufzubewahren;
einen Endegeräteinformationenbereitsteller (24), der eingerichtet ist, der Ausgabevorrichtung (13) die Endgeräteinformationen in Zusammenhang mit dem Benutzer, von dem Authentifizierungsprozessor (23) erfolgreich authentifiziert worden ist, als eine Antwort auf eine Authentifizierungsanfrage von dem erfolgreich authentifizierten Benutzer bereitzustellen.

7. Ausgabesystem (1) gemäß Anspruch 6, bei dem
das Endgerät (14) enthält:
einen Ausgabedatenakkumulierprozessor (42), der eingerichtet ist, Ausgabedaten zu akkumulieren;
einen Ausgabedatenbereitsteller (44), der eingerichtet ist, der Ausgabevorrichtung (13) die Ausgabedaten basierend auf einer Ausgabedateneinleseanfrage von der Ausgabevorrichtung (13) bereitzustellen; und
einen Einstellungsprozessor (41), der eingerichtet ist, eine Registrieranfrage der Endgeräteinformation in Zusammenhang mit dem Benutzer an die Authentifizierungsvorrichtung (11) zu übertragen und die Endgeräteinformation in Zusammenhang mit dem Benutzer in der Authentifizierungsvorrichtung (11) zu registrieren.

8. Ausgabesystem (1) gemäß Anspruch 7, bei dem
der Einstellungsprozessor (41) eingerichtet ist, die Registrieranfrage der Endgeräteinformation in Zusammenhang mit dem Benutzer zu jeder vorbestimmten Zeit oder dann, wenn die Endgeräteinformationen sich geändert haben, zu übertragen.

9. Ausgabevorrichtung gemäß irgendeinem der Ansprüche 6 bis 8, bei der die Authentifizierungseinrichtung (11) enthält:
einen Zertifikatinformationenbereitsteller, der eingerichtet ist, der Ausgabevorrichtung (13) Zertifikatinformationen bereitzustellen, die eine Zugangsberechtigung zum Autorisieren der Ausgabevorrichtung (13) zum Zugang zu dem Endgerät (14) anzeigen; und
einen Gültigkeitsermittlungsergebnisbereitsteller, der eingerichtet ist, eine Gültigkeitsermittlungsanfrage der Zertifikatinformationen von dem Endgerät (14) zu empfangen und eine Gültigkeitsermittlungsergebnis der Zertifikatinformationen dem Endgerät (14) bereitzustellen, wobei
die Ausgabevorrichtung (13) enthält:
eine Zertifikatinformationenanfrageeinheit, die eingerichtet ist, eine Zertifikatinformationenbereitstellungsanfrage zum Anfragen der Authentifizierungsvorrichtung zum Bereitstellen der Zertifikatinformationen zu übertragen; und
eine Prozessanfrageeinheit, die eingerichtet ist, eine Prozessanfrage an das Endgerät (14) zu übertragen, indem Zertifikatinformationen, die von der Authentifizierungsvorrichtung (11) bereitgestellt worden sind, der Prozessanfrage beigefügt werden, und wobei
das Endgerät (14) enthält:
eine Gültigkeitsermittlungsanfrageeinheit, die eingerichtet ist, eine Gültigkeitsermittlungsanfrage der der Prozessanfrage beigefügten Zertifikatinformationen von der Ausgabevorrichtung (13) zu der Authentifizierungsvorrichtung (11) zu übertragen; und
eine Prozessausführeinheit, die eingerichtet ist, einen Prozess in Antwort auf eine Anfrage von der Ausgabevorrichtung (13) durchzuführen, wenn ein Gültigkeitsermittlungsergebnis der von der Authentifizierungsvorrichtung (11) bereitgestellten Zertifikatinformationen anzeigt, dass die Zertifikatinformationen gültig sind.

10. Ausgabeverfahren, dass in einem Ausgabesystem (1) ausgeführt wird, wobei das Ausgabesystem (1) ein Endgerät (14); eine Ausgabevorrichtung (13) und eine Authentifizierungsvorrichtung (11) enthält, wobei das Endgerät (14), die Ausgabevorrichtung (3) und die Authentifizierungsvorrichtung (11) über ein Netzwerk (11) verbunden sind, wobei das Ausgabeverfahren enthält:
die Authentifizierungsvorrichtung (11) wird veranlasst,
einen Authentifizierungsprozess eines Benutzers durchzuführen,
Endgeräteinformationen in Zusammenhang mit dem Benutzer aufzubewahren, und
der Ausgabevorrichtung (13) die Endgeräteinformationen in Zusammenhang mit dem Benutzer, der in den durchgeführten Authentifizierungsprozess erfolgreich authentifizierten Benutzer als eine Antwort auf eine Authentifizierungsanfrage von dem erfolgreich authentifizierten Benutzer bereitzustellen; und
die Ausgabevorrichtung (13) wird veranlasst,
die Authentifizierungsanfrage des Benutzers an die Authentifizierungsvorrichtung (11) zu übertragen, um die Endgeräteinformation im Zusammenhang mit dem Benutzer einzulesen, wenn die Authentifizierung des Benutzers erfolgreich war,
die eingelesenen Endgeräteinformationen in Zusammenhang mit dem Benutzer zu akkumulieren,
in dem Endgerät (14) akkumulierte Ausgabedaten von dem Endgerät (14), das von den Endgeräteinformationen in Zusammenhang mit dem Benutzer spezifiziert wird, einzulesen, und
einen Ausgabeprozess zum Ausgeben der Ausgabedaten durchzuführen, wobei
die in dem Endgerät (14) akkumulierten Ausgabedaten von den Endgeräteinformationen in Zusammenhang mit dem Benutzer spezifizierten Endgerät (14) eingelesen werden, sobald eine Antwort auf die Authentifizierungsanfrage des Benutzers von der Authentifizierungsvorrichtung (11) nicht eingelesen wird, und
die Ausgabedaten von dem Endgerät (14) erhalten werden, das von den Endgeräteinformation in Zusammenhang mit dem Benutzer spezifiziert wird, wobei die Endgeräteinformation akkumuliert worden sind, wenn die Authentifizierung des Benutzers erfolgreich gewesen war.

## Revendications

1. Appareil de sortie (13) configuré pour réaliser des communications avec un appareil de terminal (14) et un appareil d'authentification (11), l'appareil de sortie (13) comprenant :
une unité de demande d'authentification (33) configurée pour transmettre une demande d'authentification d'un utilisateur à l'appareil d'authentification (11) pour acquérir, lorsque l'authentification de l'utilisateur est un succès, des informations d'appareil de terminal en association avec l'utilisateur ;
une unité d'accumulation d'informations d'appareil de terminal (37) configurée pour accumuler les informations d'appareil de terminal acquises en association avec l'utilisateur ;
une unité d'acquisition de données de sortie (36) configurée pour acquérir des données de sortie accumulées dans l'appareil de terminal (14) à partir de l'appareil de terminal (14) spécifié par les informations d'appareil de terminal acquises en association avec l'utilisateur ; et
un processeur de sortie (38) configuré pour réaliser un processus de sortie pour sortir les données de sortie, dans lequel
l'unité d'acquisition de données de sortie (36) est configurée pour acquérir, suite à l'échec de l'acquisition d'une réponse à la demande d'authentification de l'utilisateur provenant de l'appareil d'authentification (11), les données de sortie accumulées dans l'appareil de terminal (14) à partir de l'appareil de terminal (14) spécifié par les informations d'appareil de terminal en association avec l'utilisateur, et
les données de sortie sont obtenues de l'appareil de terminal (14) qui est spécifié par les informations d'appareil de terminal en association avec l'utilisateur, les informations d'appareil de terminal ayant été accumulées dans l'unité d'accumulation d'informations d'appareil de terminal (37) lorsque l'authentification de l'utilisateur est un succès.

2. Appareil de sortie (13) selon la revendication 1, comprenant en outre :
une unité d'acquisition d'informations de données de sortie (34) configurée pour acquérir des informations de données de sortie concernant les données de sortie accumulées dans l'appareil de terminal (14) à partir de l'appareil de terminal (14) spécifié par les informations d'appareil de terminal acquises en association avec l'utilisateur ; et
un récepteur de sélection de données de sortie (35) configuré pour recevoir, à partir de l'utilisateur, un élément sélectionné des données de sortie acquises à partir de l'appareil de terminal (14) sur la base des informations de données de sortie acquises.

3. Appareil de sortie (13) selon la revendication 2, dans lequel
lorsque des données de sortie acquises à partir du terminal (14) sont déterminées être chiffrées sur la base d'informations indiquant le fait que les données de sortie incluses dans les informations de données de sortie concernant les données de sortie ont été chiffrées ou non, le processeur de sortie (38) est configuré pour réaliser un processus de sortie des données de sortie après que les données de sortie ont été déchiffrées.

4. Appareil de sortie (15) selon l'une quelconque des revendications 1 à 3, dans lequel
l'unité de demande d'authentification (33) est configurée pour transmettre des informations de certificat, fournissant une demande indiquant une autorisation d'accès pour l'appareil de sortie (13) pour accéder à l'appareil de terminal (14), à l'appareil d'authentification (11), pour acquérir les informations de certificat et pour transmettre une demande de processus, avec les informations de certificat, à l'appareil de terminal (14).

5. Appareil de sortie (13) selon la revendication 4, dans lequel
l'authentification réalisée par l'appareil d'authentification (11) est une authentification Kerberos.

6. Système de sortie (1), comprenant :
un appareil de terminal (14) ;
un appareil de sortie (13) selon la revendication 1 ;
et un appareil d'authentification (11), l'appareil de terminal (14), l'appareil de sortie (12) et l'appareil d'authentification (11) étant connecté par l'intermédiaire d'un réseau (N1), dans lequel
l'appareil d'authentification (11) inclut
un processeur d'authentification (23) configuré pour réaliser un processus d'authentification d'un utilisateur ;
un conteneur d'informations d'appareil de terminal (22) configuré pour contenir des informations d'appareil de terminal en association avec l'utilisateur ;
un fournisseur d'informations d'appareil de terminal (24) configuré pour fournir, à l'appareil de sortie (13), les informations d'appareil de terminal en association avec l'utilisateur qui a été authentifié avec succès par le processeur d'authentification (23), en tant que réponse à une demande d'authentification provenant de l'utilisateur authentifié avec succès.

7. Système de sortie (1) selon la revendication 6, dans lequel l'appareil de terminal (14) inclut
un processeur d'accumulation de données de sortie (42) configuré pour accumuler des données de sortie ;
un fournisseur de données de sortie (44) configuré pour fournir, à l'appareil de sortie (13), les données de sortie, sur la base d'une demande d'acquisition de données de sortie provenant de l'appareil de sortie (13) ; et
un processeur de réglage (41) configuré pour transmettre une demande d'enregistrement des informations de terminal en association avec l'utilisateur à l'appareil d'authentification (11), et enregistrer les informations de terminal en association avec l'utilisateur dans l'appareil d'authentification (11).

8. Système de sortie (1) selon la revendication 7, dans lequel
le processeur de réglage (41) est configuré pour transmettre la demande d'enregistrement des informations de terminal en association avec l'utilisateur lorsque les informations de terminal ont changé, ou à chaque instant prédéterminé.

9. Appareil de sortie selon l'une quelconque des revendications 6 à 8, dans lequel
l'appareil d'authentification (11) inclut
un fournisseur d'informations de certificat configuré pour fournir, à l'appareil de sortie (13), des informations de certificat indiquant l'autorisation d'accès pour autoriser à l'appareil de sortie (13) d'accéder à l'appareil de terminal (14) ; et
un fournisseur de résultat de détermination de validité configuré pour recevoir une demande de détermination de validité des informations de certificat à partir de l'appareil de terminal (14), et fournir un résultat de détermination de validité des informations de certificat à l'appareil de terminal (14), dans lequel
l'appareil de sortie (13) inclut
une unité de demande d'informations de certificat configurée pour transmettre des informations de certificat fournissant une demande pour demander à l'appareil d'authentification de fournir les informations de certificat ; et
une unité de demande de processus configurée pour transmettre une demande de processus à l'appareil de terminal (14) en attachant les informations de certificat fournies de l'appareil d'authentification (11) à la demande de processus, et dans lequel
l'appareil de terminal (14) inclut
une unité de demande de détermination de validité configurée pour transmettre une demande de détermination de validité des informations de certificat attachées à la demande de processus provenant de l'appareil de sortie (13) à l'appareil d'authentification (11) ; et
une unité d'exécution de processus configurée pour réaliser un processus en réponse à une demande provenant de l'appareil de sortie (13) lorsqu'un résultat de détermination de validité des informations de certificat fournies de l'appareil d'authentification (11) indique que les informations de certificat sont valides.

10. Procédé de sortie exécuté dans un système de sortie (1), le système de sortie (1) incluant un appareil de terminal (14) ; un appareil de sortie (13); et un appareil d'authentification (11), l'appareil de terminal (14), l'appareil de sortie (3) et l'appareil d'authentification (11) étant connectés par l'intermédiaire d'un réseau (11), le procédé de sortie comprenant :
forcer l'appareil d'authentification (11) à
réaliser un processus d'authentification d'un utilisateur,
contenir des informations d'appareil de terminal en association avec l'utilisateur, et
fournir, à l'appareil de sortie (13), les informations d'appareil de terminal en association avec l'utilisateur qui a été authentifié avec succès dans le processus d'authentification réalisé, en tant que réponse à une demande d'authentification provenant de l'utilisateur authentifié avec succès ; et forcer l'appareil de sortie (13) à
transmettre la demande d'authentification de l'utilisateur à l'appareil d'authentification (11) pour acquérir, lorsque l'authentification de l'utilisateur est un succès, les informations d'appareil de terminal en association avec l'utilisateur,
accumuler les informations d'appareil de terminal acquises en association avec l'utilisateur,
acquérir des données de sortie accumulées dans l'appareil de terminal (14) à partir de l'appareil de terminal (14) spécifié par les informations d'appareil de terminal acquises en association avec l'utilisateur, et
réaliser un processus de sortie pour sortir les données de sortie, dans lequel
suite à l'échec de l'acquisition d'une réponse à la demande d'authentification de l'utilisateur provenant de l'appareil d'authentification (11), les données de sortie accumulées dans l'appareil de terminal (14) sont acquises à partir de l'appareil de terminal (14) spécifié par les informations d'appareil de terminal en association avec l'utilisateur,
et
les données de sortie sont obtenues de l'appareil de terminal (14) qui est spécifié par informations d'appareil de terminal en association avec l'utilisateur, les informations d'appareil de terminal ayant été accumulées lorsque l'authentification de l'utilisateur est un succès.
